# EUROPÄISCHE PATENTANMELDUNG

(11) **EP 1 233 087 A2**
(43) Veröffentlichungstag der Anmeldung: **21.08.2002**
(21) Anmeldenummer: 02000621.9
(22) Anmeldetag: 11.01.2002
(51) Int. Cl.: D01H 4/12

(54) **Offenend-Spinnrotor mit einer aufsetzbaren Abstützkappe**

(30) Priorität: 14.02.2001 DE 10106726
(71) Anmelder: Rieter Ingolstadt Spinnereimaschinenbau AG, 85055 Ingolstadt (DE)
(72) Erfinder: Schuller, Edmund, 85055 Ingolstadt (DE); Knabel, Manfred, 85055 Ingolstadt (DE); Strasser, Werner, 8266 Steckborn (CH)
(74) Vertreter: Bergmeier, Werner, Dipl.-Ing.

(57) **Zusammenfassung**

Die Erfindung betrifft einen Offenend-Spinnrotor mit einem Schaft (1), auf dessen freies Ende eine Abstützkappe (7d) aufsetzbar ist, eine Abstützkappe hierfür sowie ein Verfahren zur Herstellung eines Offenend-Spinnrotors. Erfindungsgemäß wird der Offenend-Spinnrotor dadurch weitergebildet, daß der Schaft (1) eine stirnseitige Ausrichtfläche (5, 6) und die Abstützkappe (7d) eine Gegenausrichtfläche (9, 10) zum Ausrichten der Abstützkappe (7d) bezüglich der zur Rotorachse senkrecht stehenden Ebene und/oder eine schräge Ausrichtfläche zum Ausrichten und koaxialen Zentrieren der Abstützkappe (7d) zum Schaft (1) aufweist.

## Beschreibung

Die Erfindung betrifft einen Offenend-Spinnrotor mit einem Schaft, auf dessen freies Ende eine Abstützkappe aufsetzbar ist, und eine Abstützkappe hierfür.

Bei einem bekannten Rotorschaft (DE 40 20 411 A1) wird auf dem freien Ende des Rotorschaftes auf einen Ansatz oder einen Stutzen eine Abstützkappe aufgesetzt. Bei Betrieb des Spinnrotors wird das freie Schaftende mit der Abstützkappe gegen eine Kugel gedrückt, die durch die Rotation der Abstützkappe angetrieben wird, so daß die Kugel von einem Schmiermittelreservoir Schmiermittel zwischen die Kugelfläche und die Fläche der Abstützkappe einträgt. Die Außenfläche des Zapfens dient als Führungsfläche zur Zentrierung und Ausrichtung der Abstützkappe, wobei die Eindringtiefe des Zapfens in die Abstützkappe über die Hälfte der Gesamttiefe der Abstützkappe beträgt. Gleichzeitig bilden die Außenumfangsfläche des Zapfens und die Innenfläche der Abstützkappe eine Preßpassung, so daß die Abstützkappe auf den Zapfen am freien Ende des Rotorschaftes aufgepreßt werden muß. Aufgrund der Preßpassung wird das Luftvolumen in der Abstützkappe beim Eindringen des Zapfens komprimiert. Um den Zapfen bis zur gewünschten Eindringtiefe einschieben zu können, ist die Bohrung in der Abstützkappe tiefer als die Höhe des Zapfens, so daß ein Totvolumen zur Aufnahme der komprimierten Luft bereitgestellt wird. Da die Lagerfläche der Abstützkappe einen Verschleiß durch die Lagerung an der Kugel erfährt, soll durch die Preßpassung die Abstützkappe austauschbar sein, so daß die Abstützkappe vom Rotorschaft abgelöst und durch eine neue ersetzt wird, sobald der Verschleiß zu stark geworden ist. Bei Verwendung eines Keramikmaterials für die Abstützkappe besteht wegen der Sprödigkeit des Materials die Gefahr, daß aufgrund der radial wirkenden Preßpassung die Hülse der Abstützkappe beim Aufpressen zerspringt. Auch aufgrund von Temperaturgradienten zwischen der Abstützkappe und dem Zapfen sowie aufgrund unterschiedlicher Wärmeausdehnungskoeffizienten kann es bei Betrieb und Erwärmung des Rotorschaftes bzw. der Abstützkappe zu einem Riß in der Hülse und dem Abplatzen der Abstützkappe kommen. Weiterhin kann sich die Preßpassung aufgrund der am Spinnrotor auftretenden Vibrationen, zum Beispiel durch Schläge zwischen Abstützkappe und Lagerkugel, lösen und unterstützt durch die erwärmte und komprimierte Luft im Totvolumen die Abstützkappe absprengen. Schließlich erfordert die radiale Preßpassung eine starke Wandung der Abstützkappe, so daß deren Durchmesser groß ist. Aufgrund des großen Durchmessers der Abstützkappe wird das Schmiermittel, das vom Schmiermittelvorrat durch die Kugel auf die Abstützkappe aufgetragen wird, mit hoher Fliehkraft und daher hoher Geschwindigkeit von der Abstützkappe geschleudert, so daß das Schmiermittel über einen sehr weiten Bereich um das Axiallager verstreut wird. Wie bereits oben erwähnt, erfolgt bei dieser Abstützkappe die Ausrichtung der Abstützkappe zum Schaft des Spinnrotors durch die axial verlaufende Führungs- bzw. Ausrichtfläche, die nur dann zu einer wirksamen Ausrichtung führt, wenn gleichzeitig eine radial wirkende Preßpassung erfolgt, die mit den oben beschriebenen Problemen verbunden ist.

Es ist daher Aufgabe der Erfindung, einen Offenend-Spinnrotor mit einer aufsetzbaren Abstützkappe sowie eine Abstützkappe und ein Verfahren zu dessen Herstellung vorzusehen, bei denen eine einfache und sichere Ausrichtung der Abstützkappe bzgl. des Offenend-Spinnrotors ohne das Risiko eines Folgeschadens erfolgt.

Diese Aufgabe wird mit den Merkmalen des Anspruchs 1, 3, 17, 19 bzw. 20 gelöst.

Bei einem Offenend-Spinnrotor mit den Merkmalen gemäß des Oberbegriffs des Anspruchs 1 ist bei dem Schaft eine stirnseitige Ausrichtfläche und bei der Abstützkappe eine gegenüberliegende stirnseitige Ausrichtfläche zum Ausrichten der Abstützfläche der Abstützkappe zur Rotorachse vorgesehen. Damit werden zwei Flächen parallel zueinander ausgerichtet, die einerseits die senkrechte Fläche zur Achse des Schaftes und andererseits die senkrechte Fläche zur Achse der Abstützkappe ist. Durch das parallele Ausrichten der Ebenen werden die beiden Achsen zueinander zumindest parallel ausgerichtet. Damit wird gewährleistet, daß im Falle einer ebenen Abstützfläche der Abstand zwischen der Lagerkugel und dem Schaft ohne die Abstützkappe gleichbleibend ist. Daher werden axiale Vibrationen des Schaftes aufgrund einer axialen Dejustierung vermieden.

Eine Ausrichtfläche ist dabei regelmäßig eine Fläche, an der eine entsprechende Gegenausrichtfläche ausgerichtet wird, so daß diese Flächen parallel zu liegen kommen. Dabei können die Ausrichtfläche und die Gegenausrichtfläche unmittelbar zur Anlage gelangen oder beispielsweise die Ausrichtflächen mit einer Zwischenlage zu einer parallelen Ausrichtung gelangen, z.B. mittels eines Klebstoffs, der sich mit gleichmäßiger Schichtdicke zwischen den Flächen verteilt.

Da im Falle einer außermittigen Lagerung, die gezielt eingestellt wird oder sich aufgrund von Justageabweichungen ergibt, der Anlagepunkt der Kugel auf der Abstützfläche der Abstützkappe nicht auf der Achse, sondern versetzt dazu liegt, läuft die Kugel des Axiallagers auf einer Kreislinie auf der Fläche der Abstützkappe ab. Würde nach dem Befestigen der Abstützkappe am Rotorschaft die Achse der Abstützkappe geneigt zur Rotorachse stehen, so verändert sich während der Drehung der Abstand zwischen der Kugel und dem Rotorschaft. Durch die schnelle Drehung und den in Richtung Kugel wirkenden Axialschub auf den Rotor kommt es zu einem schlagbohrerartigen Abheben und Aufsetzen der Abstützfläche der Abstützkappe gegenüber der Kugeloberfläche. Zur Vermeidung dieser Unwucht ist es daher erforderlich, daß die Rotationsachse der Abstützkappe und die Drehachse des Schaftes parallel zueinander ausgerichtet sind. Gegenüber dieser Unwucht ist eine radiale Unwucht, die durch radiale Dejustierung der Abstützkappe auf dem Schaft bewirkt wird, nachrangig, da der Durchmesser der Abstützkappe klein ist und somit das radiale Unwuchtmoment bezogen auf den gesamten Spinnrotor verhältnismäßig geringfügig ist.

Es ist weiterhin nicht notwendig, eine axial verlaufende Ausrichtfläche vorzusehen, die eine axial wirkende Preßpassung erfordert. Daher kann die Wandung der Hülse der Abstützkappe dünn gehalten werden, so daß der Austrag von Schmierstoffen minimiert wird und eine Zerstörung bzw. ein Absprengen der Abstützkappe nicht auftreten kann.

Bei einer vorteilhaften Ausgestaltung kann die Tiefe der Ausnehmung in der Abstützkappe gleich oder kleiner als die Hälfte der Gesamthöhe der Abstützkappe sein. Durch die Ausrichtung an stirnseitigen und/oder schrägen Ausrichtflächen ist es nicht notwendig, die radial verlaufenden Innenfläche der Abstützkappe oder Außenfläche des Zapfens zum Ausrichten einzusetzen. Weiterhin ist die erforderlich radiale Abstützung der Abstützkappe auf dem Schaftende sehr gering, so daß der Schaft nur wenig in die Abstützkappe eindringen muß. Aufgrund der geringen Tiefe der Ausnehmung in der Abstützkappe kann die Abstützkappe einfacher hergestellt werden.

Da keine radial wirkende Preßpassung erforderlich ist, kann zwischen der Außenfläche des Zapfens des Schaftes und der Innenwandung der Abstützkappe ein Spiel vorgesehen werden, so daß die Anforderung an die Maßhaltigkeit bei der Herstellung geringer sind. Zusätzlich kann durch das Spiel zwischen der Außenfläche des Zapfens und der Innenwand der Abstützkappe die durch den Zapfen aus der Abstützkappe verdrängte Luft einfach entweichen. Eine Kompression des Luftvolumens und eine Ausdehnung der Luft durch Erwärmung tritt dadurch nicht auf.

Alternativ oder zusätzlich zu der stirnseitigen Ausrichtfläche am Schaft wird eine schräge Ausrichtfläche vorgesehen, der eine entsprechend ausgebildete Zentrierfläche der Abstützkappe beim Aufsetzen der Abstützkappe auf das Schaftende gegenüberliegt. Durch die zueinander ausgerichteten Schrägen des Schaftes und der Abstützkappe erfolgt ebenfalls eine parallele Ausrichtung der Rotationsachsen der Abstützkappe und des Schaftes, so daß die oben beschriebene Ausrichtung der Abstützfläche der Abstützkappe zur Axiallagerkugel erfolgt. Gleichzeitig erfolgt durch die schräge, rotationssymmetrische Zentrier- bzw. Ausrichtfläche (z.B. kegel- bzw. kegelstumpfartige Flächen) eine koaxiale Ausrichtung der Abstützkappe zum Schaft. Dadurch läßt sich eine radiale Unwucht minimieren bzw. beseitigen.

Bei einer besonders vorteilhaften Ausgestaltung wird als Ausrichtfläche des Schaftes die Stirnfläche, zum Beispiel eines Zapfens verwendet, der auf dem Boden der Abstützkappe als Gegenausrichtfläche aufliegt. Dabei ist die Fläche zum Ausrichten sehr groß, während die Wandung der Abstützkappe, die um den Zapfen liegt, sehr dünn gehalten werden kann.

Liegt die Schräge der Ausrichtfläche im Bereich um 45°, so kann bei Verwendung eines Klebemittels zum Aufkleben der Abstützkappe auf den Schaft eine besonders stabile Klebung erreicht werden. Dabei wirkt eine axiale oder radiale Belastung der Abstützkappe nicht nur senkrecht zur Klebefläche, sondern ebenso in eine parallele Richtung dazu, wobei die Klebeverbindung in Scherrichtung besonders stabil ist. Dabei bietet die Verwendung eines Klebemittels zur Befestigung der Stützkappe auf dem Schaft eine besonders schnelle und kostengünstige Befestigung. Eine Wiederlösbarkeit der Klebung muß dabei nicht gegeben sein, da üblicherweise der Verschleiß des Rotortellers oder des Rotorschaftes im Bereich des Verschleißes der Abstützkappe liegt, so daß der Spinnrotor bevorzugt als Ganzes ersetzt wird.

Wird als Klebemittel ein Klebstoff verwendet, der nach dem Aushärten elastische Eigenschaften beibehält, so wirkt der Klebstoff zwischen der Abstützkappe und dem Schaft als Dämpfungselement, welches zu einer Dämpfung der Lagerung beiträgt. Vibrationen des Schaftes werden dann nicht unmittelbar mit vollem Impuls auf die zur axialen Lagerung dienende Kugel übertragen. Daher werden die Lagerflächen des Abstützelements und die Oberfläche der Kugel weniger beschädigt, so daß sich die Lebensdauer der axialen Lagerung weiter erhöht.

Ist die Abstützfläche der Abstützkappe eben, so genügt es, allein die Ausrichtflächen der Abstützkappe und des Ende des Schaftes gegeneinander auszurichten. Eine koaxiale Ausrichtung ist dabei nicht notwendig, da selbst bei einer leichten axialen Dejustierung der Abstützkappe der Rotorschaft immer in einer Ebene entlang der Abstützkugel läuft. Die Anforderung an die Maßhaltigkeit bei radialen Maßen und die radiale Justierung beim Aufsetzen der Abstützkappe auf den Schaft sind daher gering.

Durch Vorsehen eines Entlüftungsdurchgangs im Schaft und/oder eines Entlüftungskanals in der Abstützkappe kann beim Aufsetzen der Abstützkappe auf den Schaft die Luft, die durch einen Zapfen oder ein Bolzenende des Spinnrotors in der Kappe komprimiert wird, ohne Weiteres entweichen. Dadurch wird ein Lufteinschluß in der Abstützkappe verhindert. Es muß daher kein Totvolumen vorgesehen werden, in dem die durch den Bolzen verdrängte Luft innerhalb der Stützkappe komprimiert werden kann. Es ist auch keine komprimierte Luft vorhanden, die bei Vibration die Abstützkappe vom Schaft absprengen könnte. Bei Verwendung von Klebstoff als Befestigungsmittel der Abstützkappe am Schaft kann durch den Entlüftungsdurchgang und/oder den Entlüftungskanal überschüssiger Klebstoff entweichen, so daß nur eine dünne Klebstoffschicht zwischen den Ausrichtflächen vorhanden ist und somit eine genaue Ausrichtung der Flächen erfolgen kann.

Alternativ kann zwischen der Außenfläche des Zapfens und der Innenfläche der Abstützkappe ein Spalt vorgesehen werden, durch den die Entlüftung erfolgt, da zur Befestigung der Abstützkappe keine radial wirkende Presspassung erforderlich ist.

Gemäß Anspruch 17 wird eine Abstützkappe zum Aufsetzen auf einen Schaft eines Offenend-Spinnrotors vorgesehen. Die Abstützkappe hat eine Gegenausrichtfläche zum Ausrichten der Abstützkappe bezüglich einer stirnseitigen Ausrichtfläche des Schaftes und/oder eine schräge Zentrierfläche, mit der die Abstützkappe gegen eine schräge Ausrichtfläche am Schaft ausgerichtet werden kann. Dadurch wird es ermöglicht, die Abstützkappe beim Aufsetzen auf den Schaft schnell und einfach am Schaft auszurichten. Es werden daher mit der Abstützkappe die oben beschriebenen Vorteile erzielt.

Gemäß dem Verfahren zum Herstellen eines Offenend-Rotors nach Anspruch 19 wird vor der Befestigung der Abstützkappe auf dem Schaft der Schaft mit einer Hartstoffschicht beschichtet. Somit wird die Abstützkappe selbst und deren Befestigung auf dem Schaft nicht den Arbeits- und Herstellungsprozessen für den Schaft unterzogen. Wenn beispielsweise der Schaft nach der Beschichtung mit der Hartstoffschicht einem Temperprozeß unterzogen wird, so hat dies keine negativen Auswirkungen auf die später durchzuführende Befestigung der Abstützkappe.

Dagegen wird bei dem Verfahren gemäß Anspruch 20 die Abstützkappe auf dem Schaft befestigt, bevor der Schaft mit einer Hartstoffschicht beschichtet wird. Dabei wird die Abstützkappe auf den unbehandelten Schaft aufgesetzt, so daß die bei der Herstellung der Grundform erzielte Maßgenauigkeit beim Befestigen und Ausrichten der Abstützkappe auf dem Schaft unverändert erhalten bleibt. Veränderungen der Maßhaltigkeit durch ungleichmäßige Beschichtung des Schaftes spielen dabei für die Abstützkappe keine Rolle, da diese beim Beschichten bereits auf dem Schaft montiert ist. Läuft während des Beschichtungsprozesses oder anschließend ein Temperprozeß ab, so kann beispielsweise ein verwendeter Kleber gleichzeitig durch den Temperprozeß ausgehärtet werden, so daß die Herstellungszeit und -kosten reduziert werden.

Wenn die Abstützkappe mittels Klebemittel auf dem Schaft befestigt wird, so kann das Klebemittel am Boden der Abstützkappe und/oder an der Stirnseite des Schaftes aufgetragen werden. Wird dann der Ansatz des Schaftes in die Abstützkappe eingeführt, so wird zunächst die Luft vollständig verdrängt, bevor das Klebemittel durch den Ansatz verdrängt wird. Somit wird ein Einschluß von Luft zwischen Schaft und Abstützkappe vermieden, so daß die Klebefläche gleichmäßig mit Kleber benetzt und ein Druckaufbau der in einem Hohlraum erwärmten Luft bei Betrieb des Spinnrotors vermieden wird.

Anhand von Zeichnungen werden Ausführungsbeispiele der Erfindung erläutert.

Es zeigen:
- **Figur 1**: das einem Rotorteller gegenüberliegende, freie Ende eines Rotorschaftes,
- **Figur 2**: ein erstes Ausführungsbeispiel einer Verschleißkappe mit balliger Lagerfläche,
- **Figur 3**: ein zweites Ausführungsbeispiel einer Verschleißkappe mit ebener Lagerfläche,
- **Figur 4**: ein drittes Ausführungsbeispiel einer Verschleißkappe sowie das Ende des Rotorschaftes mit der aufgesetzten Verschleißkappe und
- **Figur 5**: ein viertes Ausführungsbeispiel einer Verschleißkappe sowie das Ende eines Rotorschaftes mit der aufgesetzten Verschleißkappe.

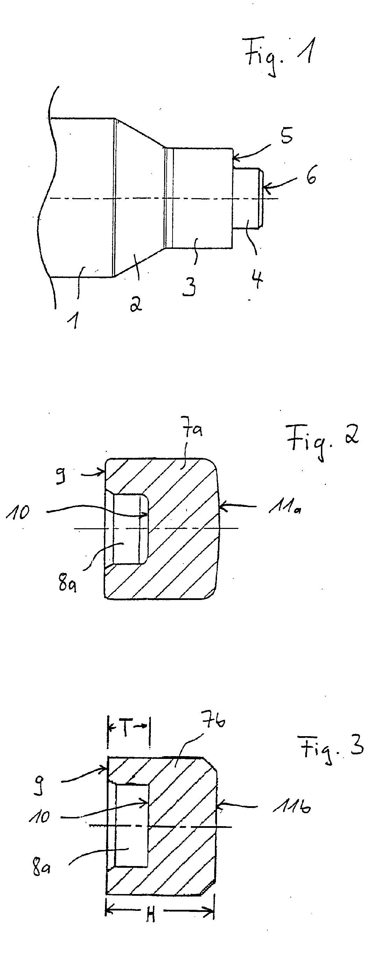

Fig. 1 zeigt das freie Ende des Schaftes 1 eines Spinnrotors für eine Offenend-Spinnmaschine. Das freie Ende des Rotorschaftes 1 liegt dem Rotorteller des Spinnrotors gegenüber und weist einen konischen Abschnitt 2 zur Verkleinerung des Schaftdurchmessers, einen zylindrischen Abschnitt 3 und einen zapfenförmigen Abschnitt 4 auf. Der zylindrische Abschnitt 3 weist eine stirnseitige Borte 5 auf, die für eine Verschleißkappe 7a, b, c, d als Anlagebzw. Ausrichtfläche dient. Weiterhin weist der zapfenförmige Abschnitt 4 eine ebene Stirnseite 6 auf, die ebenfalls als Ausricht- bzw. Anlagefläche für die Verschleißkappe dient.

Ein erstes Ausführungsbeispiel einer Verschleißkappe 7a ist in Fig. 2 dargestellt. Der Außendurchmesser der Verschleißkappe 7a entspricht dem Außendurchmesser des zylindrischen Abschnitts 3 und der zapfenförmige Abschnitt 4 des Schaftes 1 läßt sich vollständig in die im wesentlichen zylindrische Ausnehmung 8 der Verschleißkappe 7a einstecken. Die rückseitige, ringförmige Stirnfläche 9 der Verschleißkappe 7a dient als Gegenfläche für die Anlage- bzw. Ausrichtfläche der Borte 5. Der Boden 10 der zylindrischen Ausnehmung 8 bildet die Gegenfläche für die Stirnseite 6 des zapfenförmigen Abschnitts 4.

Die achsenparallele Ausrichtung der Verschleißkappe 7a zum Rotorschaft 1 erfolgt dabei durch die Anlage bzw. Ausrichtung der Fläche 5 an der Fläche 9 sowie die Ausrichtung bzw. Anlage der Fläche 10 an der Fläche 6. Alternativ kann die Ausrichtung der Verschleißkappe 7a lediglich über eine Ausrichtung der Flächen 10 und 6 zueinander oder der Flächen 9 und 5 zueinander erfolgen.

Die vordere Stirnseite der Verschleißkappe 7a wird durch eine ballige Lagerfläche 11a gebildet, die gegen eine frei drehbare Kugel des Axiallagers anliegt. Eine solche Kugel ist beispielsweise in Fig. 1 und eine entsprechende Lagerung des Spinnrotors in Figur 1 und 2 der DE 40 20 411 A1 dargestellt.

Soweit nicht anders beschrieben, entsprechen die im Folgenden dargestellten Verschleißkappen 7b, 7c und 7d sowie der Rotorschaft des zweiten, dritten und vierten Ausführungsbeispiels der Verschleißkappe 7a und dem Rotorschaft 1 des ersten Ausführungsbeispiels. Gleiche oder gleich wirkende Teile werden mit den gleichen Bezugszeichen bezeichnet.

Figur 3 zeigt ein zweites Ausführungsbeispiel einer Verschleißkappe 7b, bei der die stirnseitige Lagerfläche 11b eben ausgebildet ist. Unabhängig von einer eventuell vorhandenen, radialen Dejustierung der Verschleißkappe 7b bezüglich des Schaftes 1, d. h. bei zwar paralleler, aber nicht koaxialer Justierung der Achsen der Verschlußkappe und des Rotorschaftes 1, bleibt der Abstand zwischen dem Berührungspunkt zur Kugel des Axiallagers und dem Rotorschaft 1 konstant, unabhängig vom Drehwinkel des Rotorschaftes.

Die Verschleißkappen 7a, 7b und die unten beschriebenen Verschleißkappen 7c und 7d werden mittels Klebstoff auf das freie Ende des Rotorschaftes 1 aufgeklebt. Dazu wird das Klebemittel entweder am Boden 10 der Verschleißkappe und/oder auf der Stirnseite 6 des zapfenförmigen Abschnitts 4 aufgetragen. Beim Einsetzen des zapfenförmigen Abschnitts 4 in die Ausnehmung 8 wird zunächst aufgrund des vorhandenen Spiels zwischen der Innenwand der zylindrischen Ausnehmung und der Außenumfangsfläche des zapfenförmigen Abschnitts 4 die Luft aus der zylindrischen Ausnehmung 8 verdrängt und anschließend der Klebstoff. Somit wird gewährleistet, daß beim Aufdrücken der Verschleißkappe 7a, 7b, 7c, 7d keine Luft zwischen den Flächen 10 und 6, 5 und 9 sowie zwischen der Außenumfangsfläche des zapfenförmigen Abschnitts 4 und der Innenwand der zylindrischen Ausnehmung 8 zurückbleibt.

Da die Verbindung und Ausrichtung der Verschleißkappe in Fig. 3 ausschließlich oder überwiegend über die Flächen 6, 10 und 9, 5 erfolgt, genügt es, den zapfenförmigen Abschnitt 4 nur wenig in die Verschleißkappe 7b einzuführen. Wie dargestellt, beträgt die Eindringtiefe T nur ein Drittel der Gesamthöhe H der Verschleißkappe 7b. Bei nicht weiter dargestellten Ausführungsformen reicht es hierfür aus, wenn T ≤ H/2, vorzugsweise ist T ≤ H/3.

Figur 4 zeigt ein drittes Ausführungsbeispiel einer Verschleißkappe 7c und das freie Ende eines Rotorschaftes 1 mit der aufgesetzten Verschleißkappe 7c. Eine Ausnehmung 8b ist sechseckig in der Verschleißkappe 7c ausgebildet, so daß nach dem Aufsetzen der Verschleißkappe 7c auf den zapfenförmigen Abschnitt 4 die nächstgelegenen Stellen der Innenfläche der Ausnehmung 8b linienförmig am Außenumfang des zapfenförmigen Abschnitts 4 anliegen. Zwischen den Außenkanten 12 der achteckigen Ausnehmung 8b und der Außenumfangsfläche des zapfenförmigen Abschnitts 4 entstehen somit in axiale Richtung verlaufende Hohlräume 13, durch die beim Aufsetzen der Verschleißkappe 7c Luft entweichen kann.

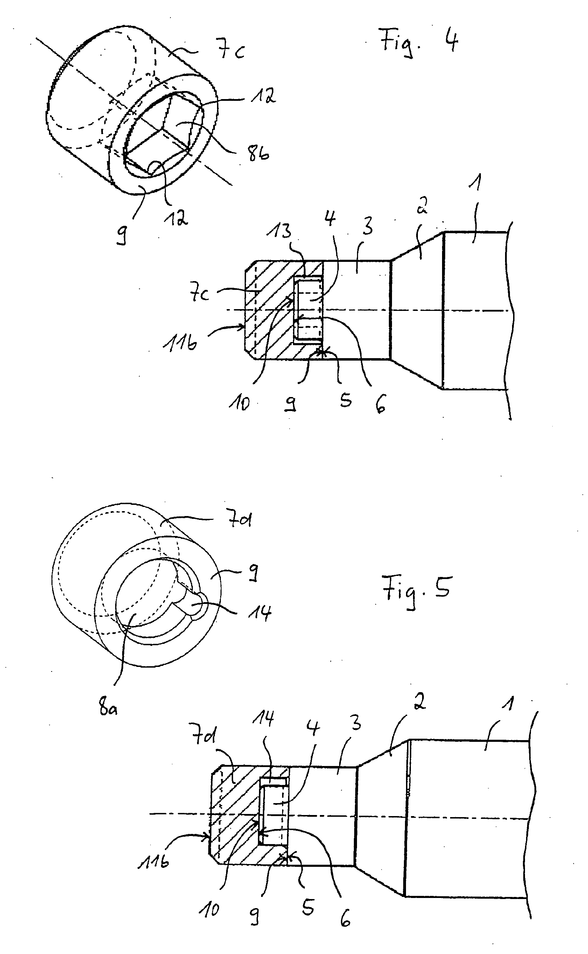

Figur 5 zeigt ein viertes Ausführungsbeispiel einer Verschleißkappe 7d, bei der angrenzend an eine zylindrische Ausnehmung 8a in der Verschleißkappe 7d ein halbrunder Entlüftungskanal 14 ausgebildet ist. Durch den Entlüftungskanal 14 kann ebenfalls beim Aufsetzen der Verschleißkappe 7d auf den Rotorschaft 1 Luft entweichen.

## Patentansprüche

1. Offenend-Spinnrotor mit einem Schaft (1), auf dessen freies Ende eine Abstützkappe (7a, 7b, 7c, 7d) aufsetzbar ist, wobei die Abstützkappe (7a, 7b, 7c, 7d) eine Abstützfläche (11a, 11b) für die axiale Lagerung des Spinnrotors aufweist, **dadurch gekennzeichnet, daß** der Schaft (1) eine stirnseitige Ausrichtfläche (5, 6) und die Abstützkappe (7a, 7b, 7c, 7d) eine Gegenausrichtfläche (9, 10) zum Ausrichten der Abstützfläche (11a, 11b) bezüglich der zur Rotorachse senkrecht stehenden Ebene aufweist.

2. OE-Spinnrotor nach Anspruch 1, **dadurch gekennzeichnet, daß** der Schaft (1) an seinem freien Ende zusätzlich eine schräge Ausrichtfläche und die Abstützkappe (7a, 7b, 7c, 7d) eine entsprechend ausgebildete Zentrierfläche zum koaxialen Zentrieren der Abstützkappe (7a, 7b, 7c, 7d) zur Rotorachse aufweist.

3. Offenend-Spinnrotor mit einem Schaft (1), auf dessen freies Ende eine Abstützkappe (7a, 7b, 7c, 7d) aufsetzbar ist, wobei die Abstützkappe (7a, 7b, 7c, 7d) eine Abstützfläche (11a, 11b) für die axiale Lagerung des Spinnrotors aufweist, **dadurch gekennzeichnet, daß** der Schaft (1) an seinem freien Ende eine schräge Ausrichtfläche und die Abstützkappe (7a, 7b, 7c, 7d) eine entsprechend ausgebildete Zentrierfläche aufweist, um die Abstützkappe (7a, 7b, 7c, 7d) koaxial zur Rotorachse zu zentrieren und um die Abstützfläche (11a, 11b) bezüglich der zur Rotorachse senkrecht stehenden Ebene auszurichten.

4. OE-Spinnrotor nach Anspruch 3, **dadurch gekennzeichnet, daß** der Schaft (1) eine stirnseitige Ausrichtfläche (5, 6) und die Abstützkappe (7a, 7b, 7c, 7d) eine Gegenausrichtfläche (9, 10) zum Ausrichten der Abstützfläche (11a, 11b) bezüglich der zur Rotorachse senkrecht stehenden Ebene aufweist.

5. OE-Spinnrotor nach Anspruch 1, 2 oder 4, **dadurch gekennzeichnet, daß** die Gegenausrichtfläche (9, 10) der Abstützkappe (7a, 7b, 7c, 7d) der untere Rand (9) und/oder der Boden (10) der Abstützkappe (7a, 7b, 7c, 7d) ist.

6. OE-Spinnrotor nach einem der Ansprüche 2 bis 5, **dadurch gekennzeichnet, daß** die schräge Ausrichtfläche konisch oder ungefähr konisch ist und/oder eine Schräge der Ausrichtfläche einen Winkel um 45° aufweist.

7. OE-Spinnrotor nach einem der vorhergehenden Ansprüche, **dadurch gekennzeichnet, daß** die Abstützkappe (7a, 7b, 7c, 7d) aus einem keramischen Werkstoff oder aus Hartmetall hergestellt ist.

8. OE-Spinnrotor nach einem der vorhergehenden Ansprüche, **dadurch gekennzeichnet, daß** die Abstützkappe (7a, 7b, 7c, 7d) mittels eines Klebemittels auf das freie Ende des Schaftes (1) aufgeklebt ist.

9. OE-Spinnrotor nach einem der vorhergehenden Ansprüche, **dadurch gekennzeichnet, daß** die Abstützfläche (11b) eben und durch die Ausrichtflächen senkrecht zur Rotorachse ausgerichtet ist.

10. OE-Spinnrotor nach einem der Ansprüche 1 bis 9, **dadurch gekennzeichnet, daß** die Abstützfläche (11b) ballig ausgebildet ist.

11. OE-Spinnrotor nach einem der vorhergehenden Ansprüche, **dadurch gekennzeichnet, daß** im Schaft (1) zumindest ein Entlüftungsdurchgang ausgebildet ist, der zumindest eine Öffnung im Bereich der durch die Abstützkappe (7a, 7b, 7c, 7d) abgedeckten Oberfläche des Schaftendes und zumindest eine Öffnung zur Außenseite des Schaftes (1), die durch die Abstützkappe (7a, 7b, 7c, 7d) nicht verdeckt wird, aufweist.

12. OE-Spinnrotor nach Anspruch 11, **dadurch gekennzeichnet, daß** der Entlüftungsdurchgang eine Nut in der Oberfläche des Schaftes (1) ist, die durch die Abstützkappe (7a, 7b, 7c, 7d) zumindest teilweise abgedeckt ist.

13. OE-Spinnrotor nach einem der vorhergehenden Ansprüche, **dadurch gekennzeichnet, daß** die Abstützkappe (7a, 7b, 7c, 7d) zumindest einen Entlüftungskanal (13, 14) vom Kappeninneren zum Kappenäußeren aufweist.

14. OE-Spinnrotor nach Anspruch 13, **dadurch gekennzeichnet, daß** der Entlüftungskanal (13, 14) zumindest teilweise an der Kappeninnenseite verläuft.

15. OE-Spinnrotor nach Anspruch 13 oder 14, **dadurch gekennzeichnet, daß** mehrere Entlüftungskanäle (13) jeweils unter gleichem Winkel zueinander am Umfang der Abstützkappe (7a, 7b, 7c, 7d) verteilt sind.

16. OE-Spinnrotor nach Anspruch 13, 14 oder 15, **dadurch gekennzeichnet, daß** zumindest ein Entlüftungskanal eine axiale Bohrung durch den Boden (10) der Abstützkappe (7a, 7b, 7c, 7d) ist.

17. Abstützkappe zum Aufsetzen auf einen Schaft (1) eines Offenend-Spinnrotors, wobei die Abstützkappe (7a, 7b, 7c, 7d) eine Abstützfläche (11a, 11b) für die axiale Lagerung des Spinnrotors aufweist, **dadurch gekennzeichnet, daß** die Abstützkappe (7a, 7b, 7c, 7d) eine Gegenausrichtfläche (9, 10) zum Ausrichten der Abstützfläche (11a, 11b) bezüglich einer stirnseitigen Ausrichtfläche (5, 6) des Schaftes (1) aufweist und/oder eine schräge Zentrierfläche aufweist, um die Abstützkappe (7a, 7b, 7c, 7d) gegen eine schräge Ausrichtfläche am freien Ende des Schaft (1) auszurichten.

18. Abstützkappe nach Anspruch 17, **dadurch gekennzeichnet, daß** die Abstützkappe (7a, 7b, 7c, 7d) nach einem der Ansprüche 1 bis 16 ausgebildet ist.

19. Verfahren zum Herstellen eines Offenend-Spinnrotors mit einer Abstützkappe (7a, 7b, 7c, 7d), mit den Schritten:
- Fertigung der Grundform des Schaftes (1) mit dem Ansatz (4) für die Abstützkappe (7a, 7b, 7c, 7d),
- Beschichtung des Schaftes (1) mit einer Hartstoffschicht und
- Befestigen der Abstützkappe (7a, 7b, 7c, 7d) auf dem Schaft (1).

20. Verfahren zum Herstellen eines Offenend-Spinnrotors mit einer Abstützkappe (7a, 7b, 7c, 7d), mit den Schritten:
- Fertigung der Grundform des Schaftes (1) mit dem Ansatz (4) für die Abstützkappe (7a, 7b, 7c, 7d),
- Befestigen der Abstützkappe (7a, 7b, 7c, 7d) auf dem Schaft (1) und
- Beschichtung des Schaftes (1) mit einer Hartstoffschicht.

21. Verfahren nach Anspruch 19 oder 20, **gekennzeichnet durch** den Schritt
- Härten des Schaftes (1) nach der Fertigung der Grundform des Schaftes (1).

22. Verfahren nach Anspruch 19, 20 oder 21, **gekennzeichnet durch** den Schritt:
- Thermische Behandlung der Beschichtung beim oder nach dem Beschichten.

23. Verfahren nach einem der Ansprüche 19 bis 22, **dadurch gekennzeichnet, daß** die Abstützkappe (7a, 7b, 7c, 7d) mittels Klebemittel auf dem Schaft (1) befestigt wird.

24. Verfahren nach Anspruch 23, **dadurch gekennzeichnet, daß** das Klebemittel ein Klebemittel zum thermischen Aushärten ist.

25. Verfahren nach Anspruch 23 oder 24, **dadurch gekennzeichnet, daß** vor dem Aufsetzen der Abstützkappe (7a, 7b, 7c, 7d) auf den Schaft (1) das Klebemittel auf den Boden (10) der Abstützkappe und/oder eine mittige Stirnfläche (6) des Schaftes (1) aufgebracht wird.

26. Verfahren nach einem der Ansprüche 19 bis 25, **gekennzeichnet durch** den Schritt:
- Befestigen des Rotortopfes am Schaft (1) vor oder nach dem Befestigen der Abstützkappe (7a, 7b, 7c, 7d).

27. Verfahren nach einem der Ansprüche 19 bis 26, **dadurch gekennzeichnet, daß** der OE-Spinnrotor nach einem der Ansprüche 1 bis 16 ausgebildet ist.

28. Offenend-Spinnrotor mit einem Schaft (1), auf dessen freies Ende eine Abstützkappe (7a, 7b, 7c, 7d) aufsetzbar ist, wobei die Abstützkappe (7a, 7b, 7c, 7d) eine Abstützfläche (11a, 11b) für die axiale Lagerung des Spinnrotors aufweist, **dadurch gekennzeichnet, daß** im Schaft (1) und/oder in der Abstützkappe (7a, 7b, 7c, 7d) zumindest ein Entlüftungskanal ausgebildet ist.
